# EUROPEAN PATENT SPECIFICATION

(11) **EP 2 887 595 B1**
(45) Date of publication and mention of the grant of the patent: **11.09.2019**
(21) Application number: 14155751.2
(22) Date of filing: 19.02.2014
(51) Int. Cl.: H04L 12/841, H04L 12/823, H04L 12/801

(54) **METHOD AND NODE FOR RETRANSMITTING DATA PACKETS IN A TCP CONNECTION**
VERFAHREN UND KNOTEN ZUR WIEDERÜBERTRAGUNG VON DATENPAKETEN IN EINER TCP-VERBINDUNG
PROCÉDÉ ET NOEUD DE RETRANSMISSION DE PAQUETS DE DONNÉES DANS UNE CONNEXION TCP

(30) Priority: 23.12.2013 EP 13199390
(43) Date of publication of application: 24.06.2015
(73) Proprietor: Rohde & Schwarz GmbH & Co. KG, 81671 München (DE)
(72) Inventor: Pfeifer, Hagen, 80687 Munich (DE)
(74) Representative: Körfer, Thomas

(56) References cited:
- EP-A1- 0 948 168
- WO-A1-99/37071
- US-A1- 2008 005 346
- US-A1- 2008 212 480
- US-A1- 2009 310 485

## Description

The invention relates to a method of forwarding data packets along a TCP connection, as well as to a computer program implementing a corresponding forwarding instance, and a corresponding forwarding node.

The Transmission Control Protocol (TCP) belongs to the Internet (or "TCP/IP") protocol suite. TCP provides a communication service on the transport layer level, which is intermediate between application layer and Internet Protocol (IP) layer / link layer. An application program residing on a first computer device may initiate sending data via a TCP/IP-based data network to a remote, second computer device by providing a single request to a TCP instance, which will then handle the details of data segmentation, controlling corresponding lower layer IP instances, etc. The data network between the devices or nodes may comprise the well known Internet and/or one or more other WANs (Wide Area Networks), and/or one or more other LANs (Local Area Network), etc.

The IP layer partitions data into data packets, each comprised of a packet header followed by a packet body. The header describes the packet's source and destination and includes further control information such as packet size. The body contains the data to be transported by IP. In particular, the body may comprise a further header, namely the TCP header of the included TCP segment then followed by the application data (payload data). Herein, while not entirely precise, the broadly accepted conventional notion of interchangeably speaking of (data, TCP, and/or IP) 'packets' or 'segments' is followed. In case a path segment is referred to instead of a data segment, such is clear from the context and/or is indicated accordingly.

Packets are individually forwarded via the network and can be individually delayed, be lost, or duplicated, for example due to network congestion, prioritized data transport, load balancing, or other network mechanisms, which may lead at the receiving node to data missing, data appearing late and/or out of order. TCP is intended to implement a reliable service ensuring that all data are received, and are received in the order as sent. To this end TCP requires mechanisms to detect problems, check and correct errors, request retransmissions of lost data, rearrange data, etc. Once the TCP receiver instance has reassembled the entire data sequence as it has been transmitted, it passes said data to the receiving application.

As one mechanism to implement reliable transmission, TCP uses sequence numbers which identify the order of data bytes sent. Sequence numbers allow receivers to discard duplicate packets, properly re-order received data, and detect losses. The receiver responds with an acknowledgment message ("ACK" message/packet) when it receives data. Acknowledgments for data sent, or lack of acknowledgments, can be used by the sender to infer network conditions along the TCP connection, and to perform corresponding congestion control, which may comprise that TCP sender and receiver alter the behavior of the flow of data.

In more detail, according to a cumulative acknowledgment scheme, an ACK sent by the receiving instance indicates that the receiver has received all data preceding the acknowledged sequence number. The sender sets the sequence number field to the sequence number of the first payload byte in the segment's data field, and the receiver sends an acknowledgment specifying the sequence number of the next byte it expects to receive. The ACK allows the sender to determine whether to retransmit a lost packet.

As a further reliability mechanism, a sender maintains a retransmission timer from when a packet was sent, and retransmits a packet if the timer expires before the message has been acknowledged. The retransmission timeout (RTO) is calculated based on an estimated round-trip time (RTT) between sender and receiver. At connection setup no information is available and the sender may assume an initial value such as RTO_init = 1 second. Later, the sender may set the RTO to a measured RTT based on one or more received ACKs, optionally with an added buffer value.

For congestion control, a sender maintains a "congestion window" (CWND) which indicates the number of bytes that can be outstanding at any time. The size thereof is calculated based on congestion estimates between sender and receiver. At connection set-up, the congestion window may be set to a small multiple of a maximum segment size (MSS) defined for that connection. If all segments are received, i.e. the ACKs have reached the sender in time, some constant is added to the CWND size. For example, the window may keep growing exponentially until a timeout occurs or the receiver reaches its limit. The congestion window may be reduced to then increase again, but only linearly on each new ACK received.

Various TCP implementations are known to implement various specific congestion control mechanisms, which are referred to as, for example, 'slow-start', 'congestion avoidance', 'fast retransmit', 'fast recovery' (TCP Tahoe, Reno, Vegas, etc.).

For example, as long as non-duplicate ACKs are received, the congestion window may additively be increased by one MSS every RTT. When a packet is lost, one or more duplicate ACKs may be received. A first duplicate ACK may be due to out-of-order packets. However, according to various specific mechanisms, if three duplicate ACKs are received (i.e., four ACKs acknowledging the same packet), the CWND may be set to half, and congestion avoidance may be performed with linear increase only. As another example, in case of RTO, i.e. an ACK times out, CWND may set to 1 MSS (or another initial value), and slow start with exponential increase may be performed (again).

From the above it is clear that packet loss is used by TCP as indicator for congestion in the network and is used to set and maximize the transmission rate. Packet loss in this sense is unavoidable and important for TCP behavior. As TCP considers packet loss to be the result of network congestion, CWND size may be reduced considerably in response to reception of duplicated ACKs or RTO. This poses a general problem in case a TCP connection extends over a path segment or link providing permanently or temporarily lower transport capacities (bandwidth) than other path segments. Over a low bandwidth link, the described TCP mechanisms may not adjust as desired. For example, spurious changes in RTT may occur without any congestion situation in fact present, which however leads to congestion control providing a considerable amount of retransmissions, slowing down the connection considerably below the capacity of the low bandwidth link.

A common illustrative example in this respect is a radio link, for example in a radio network, wireless network, mobile network, etc., wherein one or more channels thereof may experience fading, attenuation, shadowing, handover effects, etc. While in an environment with a comparatively high bandwidth a jitter can reliably be determined due to equipartition effects, in radio networks there may occur sporadic, spurious or transient effects which comprise that a single packet or few packets may be delayed for timescales much longer than the vast majority of the packets.

In a high bandwidth environment with low and reliable jitter, the conventional congestion handling responds properly when reducing CWND size in case of duplicate ACK or RTO. However, in case of spurious events such as occurring in radio networks, said behavior is not appropriate, as congestion handling is introduced without in fact a congestion situation being present. For example, the reduction of CWND size followed by slow start or congestion avoidance in response to a single packet being delayed from time to time may lead to considerable decrease in effective transmission bandwidth.

Further it is noted that the unnecessarily retransmitted data leads to further waste of bandwidth. Particular cases of TCP connections extending over a radio link have been experienced, wherein up to 40% or more of the transmitted data packets related to unnecessary spurious retransmissions. The effective transmission rate is decreased and the effective transmission time is increased, wherein the term 'effective' transmission time / rate may refer to the application layer data to be transmitted and the time required for transmitting said data from the sending application to the receiving application.

It is not in general feasible to avoid TCP in case of spurious network conditions and employ, for example, UDP or RTP instead. For example, given applications may request TCP and/or one may want to keep with the advantages of TCP such as the reliable data transmission aspects discussed above. US 7,315,515 B2 discloses a technique for TCP acceleration. Incoming ACK packets belonging to a TCP session are received in the sender, and an upstream queue is searched for queued ACK packets belonging to the same TCP session. If the incoming ACK packet is not a duplicate of the queued ACK packet, one of the queued ACK packets is replaced by the incoming ACK packet in the position in the upstream queue occupied by the oldest of the queued ACK packets. After the oldest queued ACK packet is replaced, remaining ACK packets in the queue are dropped.

Another example of the prior art can be found in WO99/37071. There is an object for an approach of optimizing a TCP performance in terms of transmission data rates and transmission times for a TCP connection over a path comprising a restricted bandwidth path segment such as, for example, a radio link.

According to one aspect of the invention, a method of forwarding data packets along a TCP connection in a forwarding node is proposed. The method comprises receiving a data packet including a TCP sequence number; storing the sequence number and determining an RTT value indicative of a Round Trip Time for the received data packet; comparing, in case a further packet is received within the Round Trip Time indicated by the RTT value, a sequence number of the further packet with the stored sequence number, and selectively dropping the further packet in case of the compared sequence numbers matching.

The RTT value can be determined based on a packet size of the received data packet. The packet size may be determined from information included in a TCP header and/or IP header of the received packet. According to some embodiments the packet size may indicate a payload of the TCP packet or IP packet.

The RTT value can additionally or alternatively be determined based on a bandwidth indication. The bandwidth indication may represent a bandwidth of a downlink path segment along which to forward the packet. The path segment may comprise, for example, a radio link or other link which may for example be prone to congestion downstream the forwarding node. The path segment may be a segment of the TCP connection between the forwarding node and a further forwarding, receiving or destination node for the TCP connection, wherein the path segment may comprise any physical and/or logical resource available for the TCP connection such as an entire physical wired or wireless link or a part, portion or fraction thereof as available for the TCP connection, for example a physical or logical channel dedicated to the TCP connection or a traffic class to which the TCP connection is assigned.

According to various aspects, the bandwidth indication may represent a maximum bandwidth available for the path segment, for example a maximum bandwidth as available on a physical layer, as available for a logical channel, etc. Maximum bandwidth information may be available as part of lower (link) layer or physical layer information, and/or may be available at the forwarding node for example from information received at the forwarding node during TCP connection setup or from TCP flow control, may be provided via administrative input, etc. Said information may also be generated, for example from monitoring TCP flow control.

Additionally or alternatively, the bandwidth indication may represent a bandwidth as currently available over the path segment. For instance, the current bandwidth may be determined based on monitoring a packet delay, packet loss, and/or a jitter over the downstream path segment, which information may be determined, for example, from monitoring lower protocol layers, monitoring ACKs on their return path associated with the given TCP connection and/or other TCP connections, and/or monitoring other kinds of connection-oriented transfer which perform some kind of positive acknowledgement scheme.

The current bandwidth may additionally or alternatively be determined from indications of network conditions, such as for example an indication of a current number of simultaneous connections over the path segment, including, e.g. other TCP connections, UDP connections, RTP connections, etc. Other conditions to be considered alternatively or additionally may include indications of cross traffic from other nodes over the path segment, higher priority traffic in case of prioritized traffic according to some QoS(Quality of Service)-scheme, physical layer conditions such as channel attenuation, etc.

According to various aspects, the RTT value may additionally or alternatively be determined based on ACK packets received by the forwarding node along the return path of the TCP connection. For example, a Round Trip Time may be determined from the time a TCP packet requires from the forwarding node to a TCP destination, and the time required for an ACK packet to travel from the TCP destination to the forwarding node. Such RTT covering a low bandwidth path segment downstream the forwarding node may be assumed to be a useful approximation of an end-to-end RTT.

Some of the above examples may further comprise the steps of detecting a reception of a duplicate ACK packet; whitelisting a sequence number as indicated in the duplicate ACK packet; and in case a data packet is received having the whitelisted sequence number, unconditionally forwarding said data packet. The whitelisting may be performed when a first, or second, or third duplicate ACK packet is received, for example. The whitelisting step may comprise storing a corresponding TCP sequence number in a whitelist of packets to be forwarded unconditionally, e.g., irrespective of whether or not the sequence number is stored for packet drop in case of retransmission. Additionally or alternatively, the whitelisting step may comprise canceling a sequence number stored in the packet drop list, and/or marking a sequence number in the packet drop list for unconditional forwarding.

According to various aspects, determining the RTT value may include adding a safeguard value. Said value may be a constant, and/or may be variable and may then be determined based on current network conditions, e.g. current conditions over the downstream path segment. According to some of these embodiments, a safeguard value may be small or vanishing in case of network congestion, e.g., a high packet loss rate, while the safeguard value may increase for decreasing network congestion, e.g. a low packet loss rate.

With regard to a determination of the RTT value, various combinations of the above-outlined embodiments can be contemplated. For example, a bandwidth indication may comprise an appropriate combination of a maximum bandwidth and a current bandwidth available over a downstream path segment.

The forwarding node may be a node separate (remote) from a node where a TCP source resides, and/or where a TCP destination resides. The data packets may then be received from an external upstream TCP source and the data packets may be forwarded towards an external downstream TCP destination, via a downstream path segment. As a specific example, the forwarding node may provide access to a radio link comprising a path segment of the TCP connection path. The data packets may be received, to be understood as a trigger to store their sequence numbers, in a queue where a routing decision related to forwarding the packets along a particular path segment downstream the node has already been performed, e.g. in an egress queue of the forwarding node queuing packets for forwarding along said path segment.

According to some of the above examples, the forwarding node may further operate to compare, by sequence number, a data packet to be forwarded with one or more further packets enqueued in the egress queue and drop an enqueued packet in case of matching sequence numbers. The search for and selective drop of duplicate packets in the queue may complement the above approach of selectively dropping packets duplicate to packets having already left the queue.

The forwarding node may operate to store sequence numbers in a cyclic buffer or ring buffer. A tail pointer or end pointer may be updated to accordingly exclude sequence numbers after a time span as indicated by the associated RTT has expired. The RTT or derivatives thereof may also be stored in the buffer. For example, a sequence number may be stored associated with an expiry date determined based on an associated RTT and indicating expiry of the sequence number according to, for example, a system clock of the forwarding node, a network clock, or another time frame. The tail pointer may then be set to exclude expired sequence numbers from sequence number scans performed to match a sequence number of an incoming received packet.

The above mentioned object is further solved by a computer program, which comprises program code portions for performing the steps of one or more of the methods and method aspects described herein when the computer program is executed on one or more computing devices, for example a routing device, a network interface, a socket, etc. or other forwarding device operable on one or more network protocol layers such as transport layer, network layer, link layer. The computer program product may for example implement a network protocol instance (forwarding instance), e.g. a TCP/IP instance, on a network interface of a general purpose hardware device.

The computer program may be stored on a computer readable recording medium, such as a permanent or re-writeable memory within or associated with a computing device or a removable CD-ROM, DVD or USB-stick. Additionally or alternatively, the computer program may be provided for download to a computing device, for example via a data network such as the Internet or a communication line such as a telephone line or wireless link.

The above mentioned object is further solved by a forwarding node for forwarding data packets along a TCP connection. The node comprises a component adapted to receive a data packet including a TCP sequence number; a component adapted to store the sequence number and determine an RTT value representing a Round Trip Time for the received data packet; a component adapted to compare, in case a further packet is received within the Round Trip Time indicated by the RTT value, a sequence number of the further packet with the stored sequence number, and to selectively drop the further packet in case of the compared sequence numbers matching.

The forwarding node may be implemented as a software, hardware, and/or firmware instance on a general-purpose or dedicated computing hardware. The forwarding node may be implemented on or as a Bridge, Router, Gateway, or any other hardware/software facility adapted for performing a routing or forwarding functionality including treating and/or forwarding of packets on network layers such as link layer, network layer, transport layer. According to exemplary embodiments, the forwarding node may be implemented as a radio or wireless access node providing access to a radio, wireless, and/or mobile network.

According to various examples, a dedicated hardware device implementing the forwarding node may comprise a specifically adapted routing hardware. A general-purpose device implementing the forwarding node may comprise a general purpose computer, e.g. a personal computer (PC), notebook, tablet, etc. or other computing device. Additionally or alternatively, the computing hardware may comprise a programmable microprocessor, an application specific integrated circuit (ASIC), a digital signal processor (DSP), one or more of these, or combinations thereof. According to specific exemplary examples, the forwarding node may be implemented on a network interface device.

In a direction from a source to a destination of a TCP connection, the forwarding node may be situated upstream to a bandwidth-restricted link such as a radio link, wherein the notion of 'restriction' may refer to a smaller (limited) bandwidth in comparison to other network links, e.g. wireline links.

According to various examples, bandwidth requirements for retransmissions can be minimized by absorbing superfluous retransmissions due to spurious packet delays.

Known solutions to optimize TCP behavior in case of TCP connections extending over path segments or links with restricted bandwidth comprise end-to-end modifications of TCP, i.e. modifications to be implemented at the sender/source instance and/or the receiver/destination instance. Such adaptations generally require complex modifications due to the end instances being in many cases remote from the path segment in question. For example, TCP Vegas or TCP Westwood propose complex CWND modifications or complex RTT calculations at the sender side. Still it is known that such modifications may not solve the issue of TCP behavior in case of transient conditions such as spurious large delay.

As a simple example, while in principle one may implement a mechanism to set RTO_init to a larger value at the sender, such modification may be improper for normal network environments. Generally, it appears that complex modifications are required to provide information to the sender regarding the remote downstream bandwidth restricted path segment and to enable the sender to perform proper RTO re/configuration and thereby avoid superfluous retransmissions. Such information should relate not only to permanent information related to the restricted bandwidth path segment, but also to transient network changes regarding channel conditions at the restricted path segment. Even in case one would accept the overhead introduced by transporting such information towards the sender, at least part of the information might already be outdated when appearing at the sender.

According to various examples, the invention proposes to consider modifications at a forwarding node along a TCP connection which is preferably located (in a network sense, for example) near to a restricted bandwidth segment of a TCP connection. According to various embodiments, whether duplicate packets are to be filtered or dropped can be decided on the basis of channel condition information readily locally available. That approach obviates complex modifications at end nodes. Optimization advantages can be achieved while complex modifications at various locations along the TCP connection can be avoided. It is possible to respond to local changes such as transient channel conditions which can also contribute to achieving advantageous optimization results.

As a specific example, according to some embodiments an RTT can be locally determined based on information related to the congested link such as a currently available bandwidth. Vice versa, information on the most restricted path segment or link governing the overall transmission rate and time may be used to (locally) determine RTT values and effectively control the TCP connection, in particular the retransmission behaviour accordingly.

The term 'congested link' is occasionally used herein for the path segment downstream the forwarding node implementing an embodiment of the invention. The term may be used even in the absence of a congestion situation as the TCP sender may respond to conditions of the restricted bandwidth path segment or congested link with congestion control measures, although in fact there are no congestion conditions other than the generally restricted bandwidth conditions on the downstream path segment.

According to various examples, superfluous duplicate packets can be identified and filtered (dropped) prior to them entering the restricted bandwidth path segment. Such behavior avoids that the generally restricted available bandwidth is further choked by superfluous retransmissions. As discussed above and exemplarily further described below, retransmissions may amount to a considerable fraction of the total traffic in terms of packets and/or data rate. For example, in certain configurations the occurrence of retransmissions due to spurious events may lead to increased delay over the restricted path segment, which may in turn trigger further retransmissions and/or onset of TCP congestion control at sender side with corresponding slow down of data transfer.

Some examples enable that a bandwidth available for effective data transfer can be increased and/or escalations can be avoided by early dropping of spurious retransmissions which may also lead to modifying and optimizing TCP behaviour to increase available bandwidth up to the maximum physically or logically available bandwidth over the restricted path segment.

According to various examples, an RTT value can advantageously be determined by taking into account a size of the packet to be forwarded. TCP data packets are generally intended to include a payload considerably larger than the header. With specific reference to forwarding via a restricted bandwidth path segment, the RTT may in fact be dependent on packet size. This effect is not properly be accounted for when setting an RTT (or RTO) according to an initial default value RTO_init, by measuring merely an average RTT, or by referring to an RTT as determined during an initial TCP three-way handshake performed by exchanging small-sized packets.

According to another or complementary view, determining an appropriate guess or prediction for an RTT value minimizes adverse effects of an inappropriate RTO timer setting at sender side, which is effectively replaced by a more appropriate timeout setting. Said setting is not provided at the sender, but along the TCP connection near to the bottleneck (as provided by the restricted bandwidth path segment); however, as the adverse effects on the transmission characteristic of the TCP connection are caused at the bottleneck, measures taken upstream the bottleneck are in the right place to avoid or overrule the major drawbacks of inappropriate TCP sender control.

According to various examples, a highly effective yet simple to implement and robust RTT prediction may be based on a bandwidth of the restricted path segment. It has turned out that for example a constant bandwidth value such as a maximum bandwidth available from a physical layer perspective may serve to provide a more appropriate and reliable RTT (or corresponding local RTO) as is normally available at the sender side according to conventional TCP handling.

According to various examples, the forwarding node manages a virtual packet buffer to account for packets which have already left the node towards the restricted link and the destination but which have not yet arrived there as predicted by the corresponding determined RTT value, if the RTT has not yet expired and/or no ACK has yet been received on the return path. The buffer needs few data only, for example the sequence number can be stored in association to a predicted RTT value (or a transformation representing a local RTO value) can be stored.

An example is performed upstream and near to the restricted path segment, or at least in a node which may be nearer to the restricted path segment than the sender, it is also possible to more specifically adapt to temporary variations in available bandwidth by taking into account information which is readily available locally and which can therefore easily be implemented. For example, channel conditions can be locally inferred in a node serving the restricted link, and so can changes in the channel conditions.

ACK spoofing is one of the options which may allow to accordingly respond to temporary changes. While the return path may in many cases is similarly restricted as the forward path, ACK spoofing turns out to be a recommendable measure, as ACK messages are normally much smaller than TCP data packets and the transport thereof may suffer a comparable small delay over the restricted return path. The information which can be gathered from inspecting incoming ACKs at the forwarding node (ACK spoofing) can be incorporated in local response mechanisms operating on timescales short enough as required for TCP optimization improvements.

Various examples are superior to solely scanning an (egress) queue at the forwarding node for duplicate sequence number, i.e. duplicate packets in the queue. For example, that measure is not effective in case of relatively few packets being in the queue, as may be the case e.g. in an initial phase of TCP or TCP congestion control (e.g. an early exponential phase of Slow Start, an early linear phase of Congestion Avoidance, etc.). In the forwarding node, a given packet may have been forwarded already at the time the superfluous duplicate packet is enqueued. However, embodiments of the invention enable suppressing adverse effects of spurious retransmissions by filtering a duplicate packet even when a given packet is already on the way or "on the fly" over the restricted segment.

Depending on implementation details, a scan for duplicate packets within the queue may not be required at all, as embodiments of the inventive mechanism will filter the duplicate packet anyway.

While a Round Trip Time (RTT) is conventionally defined end-to-end, including the Ack, herein predictions of RTT values are considered which formally relate only to travelling time of a data packet over the restricted path segment, ignoring further travelling time towards the destination, and return time of the ACK to the source. However, in many cases the end-to-end RTT may essentially be given by travel time over restricted segment and the contribution to the larger bandwidth path segments may be negligible, such that the locally predicted RTT may provide a reasonable guess of the end-to-end RTT. Nevertheless, other of the approaches discussed herein, such as the ACK spoofing, measure the RTT from the forwarding node towards the destination and back to the forwarding node, are also possible.

The invention is defined by the appended claims.

In the drawing:
- Fig. 1: schematically illustrates from a data transport perspective a TCP connection including a restricted bandwidth path segment;
- Fig. 2: illustrates from a network layer perspective functions of network components along the TCP connection of Fig. 1;
- Fig. 3: illustrates functional components of the forwarding node upstream the restricted passage of Figs. 1 and 2 according to an embodiment of the invention;
- Fig. 4: is a flow diagram illustrating an operation of the forwarding node of Fig. 3;
- Fig. 5A: is a flow diagram illustrating further details of the operation according to Fig. 4;
- Fig. 5B: is a flow diagram illustrating still further details of the operation according to Fig. 4;
- Fig. 5C: is a flow diagram illustrating still other details of the operation according to Fig. 4;
- Fig. 6: is a sequence diagram illustrating effects of an embodiment of the invention on an exemplary TCP transfer;
- Fig. 7: illustrates from a functional perspective an embodiment of a forwarding node having instantiated multiple egress queues instances;
- Fig. 8: illustrates an embodiment of a cyclic buffer as can be employed according to embodiments of the invention;
- Fig. 9: is a flow diagram illustrating operational details which may be included in an operation such as that of Fig. 4;
- Fig. 10: is a sequence diagram illustrating an effect of an embodiment of the invention implementing the operation illustrated in Fig. 9; and
- Fig. 11: illustrates a scheme of modifying predicted RTO values with a varying jitter safeguard according to an embodiment of the invention.

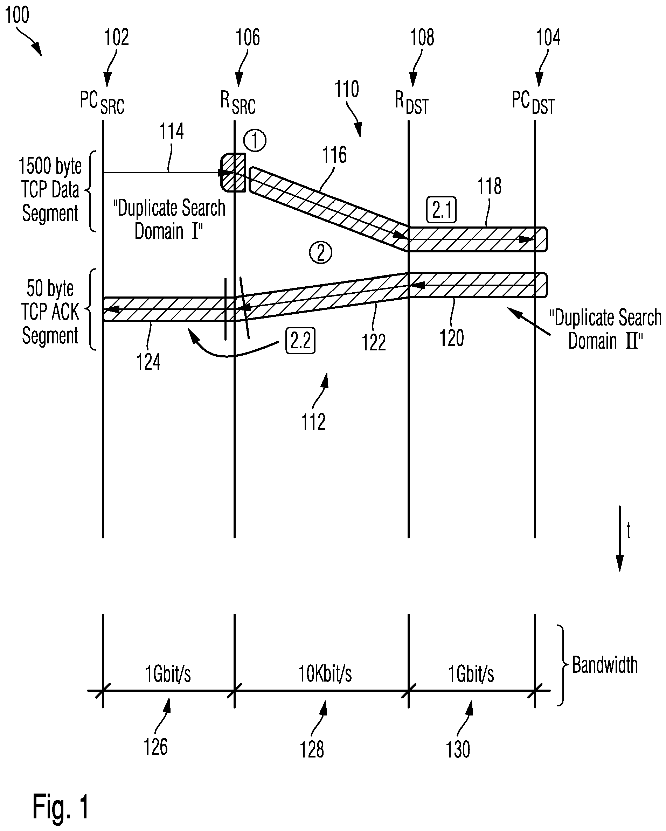

Fig. 1 schematically illustrates a TCP connection 100 for a transfer of data from a source or sender PC_{SRC} 102 to a destination or receiver PC_{DST} 104. The TCP connection 100 is built up via intermediate nodes R_{SRC} 106 and R_{DST} 108. The TCP connection 100 comprises forward path 110 for the transfer of data packets and return path 112 for returning acknowledgments (ACK packets / messages) from receiver PC_{DST} 104 to sender PC_{SRC} 102. The forward path 110 comprises path segment 114 from sender PC_{SRC} to forwarding node RC_{SRC}, path segment 116 from node R_{SRC} to node R_{DST}, and path segment 118 from node R_{DST} to receiver PC_{DST}. The return path 112 comprises path segment 120 from receiver PC_{DST} to node R_{DST}, path segment 122 from node R_{DST} to node R_{SRC}, and path segment 124 from node R_{SRC} to sender PC_{SRC}.

It is exemplarily assumed that each of sending 102 and receiving 104 instances may reside on general purpose hardware such as a personal computer (PC), while the nodes R_{SRC} 106 and R_{DST} 108 may have forwarding functionality such as routing functionality for routing concerned TCP/IP packets along the TCP connection 100 path 110. Specifically, path segments 116 and 122 may each comprise a radio (R) link, for example belonging to a wireless network such as a WLAN network, a mobile network such as an UMTS or LTE network, etc. Nodes R_{SRC} 106 and R_{DST} 108 may comprise corresponding radio access functionality and may serve as wireless access points, for example.

The radio links 116 and 122 may be restricted in available bandwidth compared to the other segments of connection 100 due to the underlying radio transport resources being generally limited in comparison to wireline data transport. For example, segments 114, 118, 120, 124 may be wire-based and may have bandwidths 126, 130 of order Gigabits per second (Gbit/s), while the intermediate restricted passages 116 and 122 are assumed to have a maximum bandwidth 128 as available on the physical layer of only 10 Kilobits per second (kbit/s).

Further, the radio-based segments 116, 122 may be prone to disturbances which in turn result in network transport characteristics in terms of delay or jitter which differ from that of wireline transport. For example, even in case packet loss due to fading etc. can be minimized by appropriate error correction, some packets may suffer comparatively long delays, which then results in a jitter profile which is different from that of a wired connection.

A conventional TCP implementation as may be implemented at the sender 102 may assume congestion conditions in view of a long delay leading to either reception of duplicate ACKs along return path 112 or RTO. According to conventional TCP handling, transmission data rate may be decreased by performing congestion control including a decrease of CWND, applying Slow Start, Congestion Avoidance, etc., which in case of repeated occurrences acts to considerably lower an effective data rate for the TCP connection 100, which may fall even below the data rate limit as given by the bandwidth available over radio link 116. Furthermore, retransmission of the concerned packets is triggered by sender 102, although in case of the unusually delayed packets is generally superfluous, which can lead to the effect that the bandwidth available via bottleneck 116 is consumed to a considerable amount by superfluous retransmissions.

The problem of superfluous retransmission behavior in case of TCP connections extending over comparatively bandwidth restricted segments is known, and would be addressed according to some conventional approaches at the sender 102 instance, e.g., by modifying a TCP/IP protocol stack of node 102. However, such conventional stack may have no information available which would allow a decision as to whether or not a duplicate ACK or RTO has in fact to be responded by CWND minimization and/or retransmission.

A conventional TCP/IP stack will initiate data transmission based on a predefined (default) initial retransmission timer RTO_init, wherein exemplary values may be in the range of 1 - 3 seconds. Only subsequently the RTO may be adapted to RTTs as measured based on received ACK packets. However, values such as those indicated above for RTO_init and/or values of RTO based on measured RTTs may be too low in cases of the TCP path including a passage with low bandwidth and/or spurious or transient behavior such as described above for radio transport.

Conventional RTT measurement/calculation approaches do not take into account packet size aspects. For example, an RTT value may be measured or calculated based only on packet delay. It is contemplated that such measure may lead to inappropriately low RTT values in case of large packets to be forwarded over low bandwidth passages in case, for example, an RTT is determined based on the TCP initial three way handshake (TWH), which is based on SYN/ACK packets generally much smaller than data-carrying TCP packets. An RTO may therefore be too small in many cases in conventional stacks which may then result in superfluous retransmissions degrading TCP performance in terms of effective transmission data rates and times.

It is further contemplated that during an ongoing TCP transmission, problems such as transient changes in available bandwidth (and resulting changes in proper RTT values) at the bottleneck, such as link 116, are difficult to handle at the sender side 102 when calculating the RTO. Generally, the sender will use outdated information and therefore the RTO cannot be adjusted to spurious network changes in delay, loss or other characteristic resulting from, e.g., cross traffic.

In view of the above and/or other or further reasons, it is proposed to implement an optimized TCP behavior near to the low bandwidth link with or without spurious behavior (the "congested" link). In the example of Fig. 1, the TCP optimizer component or instance is located before the congested, low bandwidth link 116 in device R_{SRC} 104.

According to various embodiments, a TCP behavior can be modified or optimized by one or both of the following measures performed at the forwarding node 106 upstream the restricted segment 116: As one measure which is indicated by "Duplicate Search Domain I" in Fig. 1, duplicate transmissions (packets) can be filtered by searching the local queue in R_{SRC} for packets of the same sequence number, i.e. clearly superfluous retransmissions. As another measure labeled "Duplicate Search Domain II" in Fig. 1, which can be applied alone or in conjunction with the beforementioned measure, an RTT is locally calculated for a given packet. The calculation may consider current channel conditions, a packet size and/or other characteristics or conditions. Based on that predicted RTT, which may be calculated specifically for each packet or may be calculated once for multiple packets of the TCP stream, duplicate transmissions can be identified and filtered in case a given packet has left the queue prior to the duplicate being received.

According to various embodiments, node 106 R_{src} in Fig. 1 may implement the above-mentioned local queue with one or more optimizer components associated thereto. As one operation, spurious retransmissions may be filtered or dropped (1), which may include filtering duplicate packets in the local queue and/or filtering a duplicate packet being enqueued only after a given packet has already left the queue. Further, RTT values can be calculated for all or a subset of the received packets during an ongoing TCP connection. RTT calculations for an initial RTT value and/or intermediate values can be performed based on, for example, channel properties related to link 116 such as channel attenuation, cross traffic from other nodes, simultaneous connections, etc.

If a packet is transmitted (forwarded) further towards destination 104 (i.e. forwarded), information (metadata) associated with the packet can be stored in a buffer or virtual queue. The information may include an estimated arrival time (predicted RTT) for the packet. Precisely speaking and with reference to Fig. 1, the RTT would conventionally be assumed to be the time span between a data packet leaving PC_{SRC} along the forward path 110 towards PC_{DST}, and the corresponding ACK packet arriving from the PC_{DST} along the return path 112 at PC_{SRC}. A guess for said RTT may be calculated at R_{SRC} following one or more of various approaches discussed herein (for sake of conciseness, such guessed values are also designated 'RTT' herein, even if not strictly identical with an end-to-end RTT value). According to one exemplary embodiment, a value of an estimated arrival time RTT aims at representing a time span between a given data packet leaving R_{SRC} and the corresponding ACK packet being received at R_{SRC}. For example, such time span may be measured by monitoring incoming ACK packets in an ingress queue corresponding to the egress queue of link 116.

The RTT may be transformed in a local RTO by adding RTT to the time point of forwarding the given packet, wherein the addition may potentially be modified by further adding a safeguard, etc.: If a retransmission is received prior to said time point, the duplicate packet is regarded as a superfluous transmission: The packet may be dropped. Said time point represents a retransmission timeout in the sense that after said point retransmissions will be forwarded instead of being filtered.

Further to the RTT calculations which may be performed in the forwarding node 106, it is noted that the node R_{SRC} not normally has any information on the time of travel of a data packet along segment 114. A calculation of an RTT value may comprise time of travel back and forth between R_{SRC} and R_{DST} as labeled "2" in Fig. 1, i.e. along segments 116 and 122, and time of travel back and forth between R_{DST} and PC_{DST} as labeled "2.1" in Fig. 1, i.e. along segments 118 and 120. Such RTT value can be measured by snooping ACK packets passing by node R_{SRC}. The last segment 124 / 2.2 cannot normally be measured and/or otherwise analyzed without introducing complex additional overhead. However, effects of that segment 124 are normally insignificant for an intended optimization purpose.

Instead, in many cases the major delay may occur when the comparatively large TCP data packets are forwarded over the restricted bandwidth radio link 116. For example, even the travel times of comparatively small ACK packets travelling along radio link 122 may be considerably shorter, although said link 122 will normally also be restricted. Fig. 1 indicates time "t" along a vertical axis and graphically illustrates the major delay along link 116 in comparison to the delays along the other segments with the different vertical inclinations of the various transport segments.

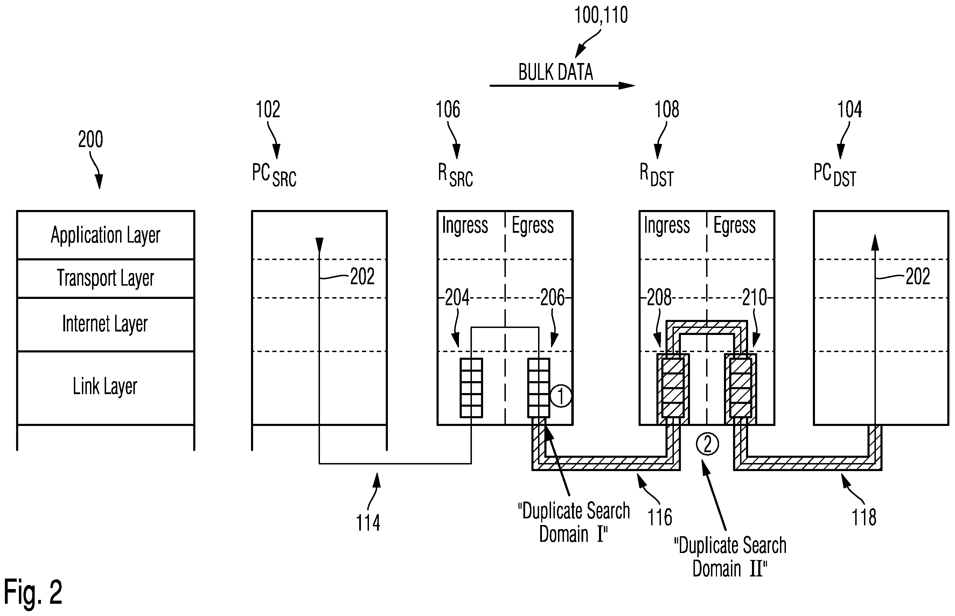

Fig. 2 schematically depicts the network components of Fig. 1 from a network function or protocol layer 200 perspective. The flow 202 of the bulk data to be transferred along the TCP connection 100, 110 is schematically illustrated. Specifically, application data 202 are provided by an application at PC_{SRC} for encapsulation to a TCP instance in the transport layer, to one or more IP instances in the network layer, and to one or more instances in the link layer for forwarding the data as payload encapsulated in TCP/IP packets via segment 114 to ingress queue 204 of R_{SRC}. Routing functionality within node R_{SRC} provides for internally forwarding the packet data to egress queue 206 for forwarding via radio link segment 116 towards ingress queue 208 of R_{DST}. Routing functionality within node R_{DST} provides for internally forwarding the data to egress queue 210 for forwarding via segment 118 to the receiver PC_{DST}. The data is received and provided by the corresponding protocol layers to the receiving application at node 104.

Fig. 2 may not be entirely precise in that queues 204, 206, 208 and 210 are depicted as part of the link layer and data stream 202 not extending into the transport layer, for example in node 106. However, any kind of functionality referring to the transport layer such as, e.g., inspecting TCP sequence numbers of the data packets will be clear to the skilled practitioner from the below description and/or general knowledge.

According to various embodiments, functionality related to the invention may be associated to node 106 upstream and serving the restricted bandwidth link 116, and may specifically be associated to the egress queue 206. According to other variants, part or all of the functionality may also be associated with ingress queue 204 of upstream node 106 and/or ingress queue 208 of downstream node 108 (or even the egress queue 210 thereof), which may however lead to an increasing complexity for example in order to, e.g., identify packets belonging to data stream 202 and predicting them being in fact routed over link 116.

More specifically regarding functionality associated to egress queue 206, the "Duplicate Search Domain I" introduced in Fig. 1 may be implemented by accordingly scanning and filtering duplicate packets in egress queue 206. "Duplicate Search Domain II" is depicted as comprising the path of a given packet having left egress queue 206 and currently travelling via segment 116 (most probably, as the longest delay may occur at said segment), or via node 108 and segment 118 towards end node 104, or the ACK travelling back along the return path, which is not depicted in Fig. 2. As long as the packet (or the ACK) is on the way according to an RTT value locally predicted in node 106, a duplicate packet after being enqueued in queue 206 can be identified and filtered.

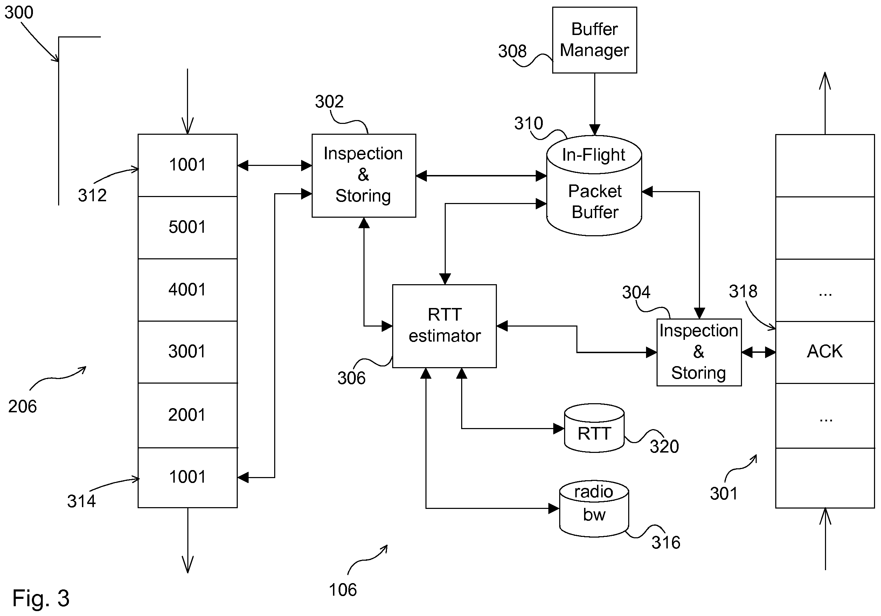

Fig. 3 illustrates functional components of an embodiment of forwarding node 106. Specifically, a socket 300 of an input/output device such as a network card or similar component is indicated as implementing a TCP/IP stack (e.g., a hardware and/or software instance) and including the egress queue 206 introduced in Fig. 2. Ingress queue 204 is omitted in Fig. 3 as presumably being implemented on a separate network interface or socket.

Socket 300 further implements ingress queue 301 for receiving packets incoming via radio link 122 (see Fig. 1), an inspection and storing component 302 for inspecting packets in queue 206 and storing corresponding metadata, an inspection and storing component 304 for inspecting packets in queue 302 and storing corresponding metadata, an RTT estimation component 306 and a buffer manager 308.

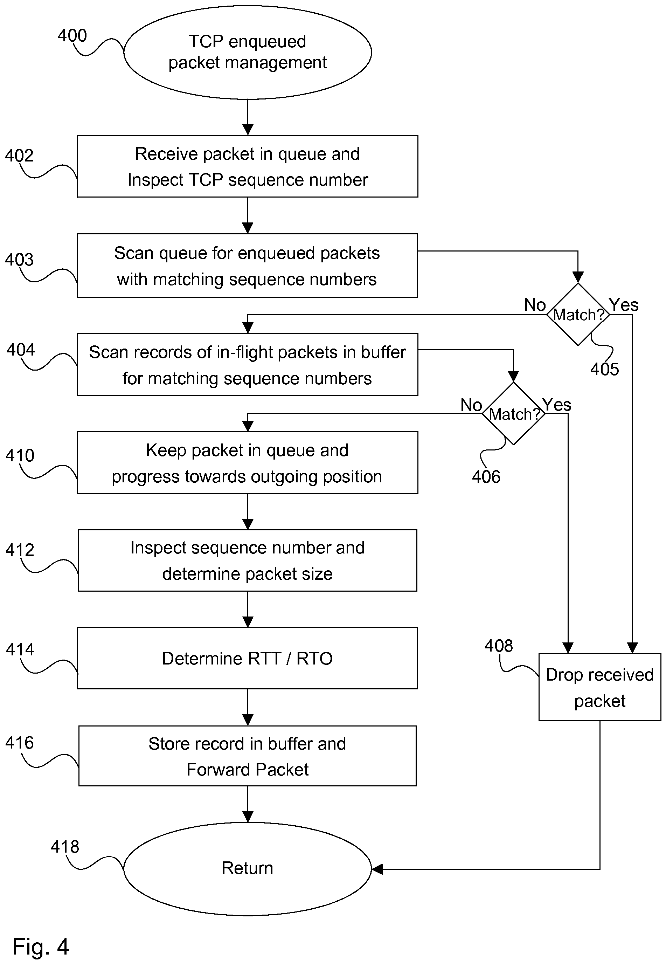

An example of operation and functional interworking of the components depicted in Fig. 3 will be discussed with reference to the example flow diagram of Fig. 4. Generally, the operation 400 relates to management of packets enqueued in queue 206, wherein it is assumed that queue 206 may only enqueue packets belonging to TCP connection 100 as depicted in Fig. 1 (or at least only those packets are considered in the following description).

In step 402, a data packet is received in queue 206 at incoming position 312 and the TCP sequence number thereof is inspected by inspection component 302. Specifically, the sequence number is extracted and in step 404 is compared with sequence numbers stored as a part of current metadata associated to queue 106 in buffer 310. The metadata in buffer 310 may comprise a list of records, wherein each record represents a packet having left queue 206 and being forwarded via link 116 towards TCP destination 104. Each record may at least indicate a sequence number of the associated packet, and further data as discussed below. The inspection component 302 may operate to scan the stored records for a match of the extracted sequence number with a stored sequence number.

At step 406 a decision is taken on whether or not a matching sequence number has been identified. In case a matching sequence number has been found, the packet received in step 402 is filtered in step 408, i.e. the packet received in step 402 is dropped from queue 206. The reason is that said packet cannot represent anything else as a retransmission initiated by sender 102 due to either duplicate ACK reception or RTO, however the retransmission being superfluous: Identification of a matching sequence number in buffer 310 means that the original packet is most probably still on travel via radio link 116 or other path segments, or the ACK packet has not yet reached back to sender 102.

There is also a further mechanism which may lead to the packet incoming in step 402 being filtered (duplicate packet search in queue 206 in step 403), which will however be discussed below for sake of clarity.

If no matching sequence number is found upon scanning buffer 310, in step 410 the packet is kept in queue 206. Optionally the sequence number thereof can be recorded in buffer 310, which however requires that the association of said stored sequence number to the packet is kept when the packet is progressing in queue 206 from incoming position 312 to outgoing or forwarding position 314. Such association may be implemented by setting an appropriate pointer or other known technique.

The packet is inspected again in step 412 when the packet is or has been advanced to outgoing position 314. According to Fig. 3, component 302 is illustrated to also perform said re-inspection; however, such illustration is merely for sake of clarity and conciseness; according to other embodiments separate components can be provided for inspection of incoming 312 packets and outgoing 314 packets.

In step 412, the sequence number is extracted again from the TCP packet header, and a packet size of the outgoing packet is determined, for example by reading appropriate fields in the IP and TCP headers of the packet. The packet size may be intended to indicate the size of the entire packet including any header, even down to the physical layer, or may be intended to indicate only the payload of, e.g., the TCP or the IP packet. As generally TCP packets are intended to carry a payload considerably larger than the header to optimize behavior in view of the large overhead involved with managing TCP connections, it may be a matter of insignificance for various of the purposes discussed herein as to whether or not the packet size as determined includes header sizes.

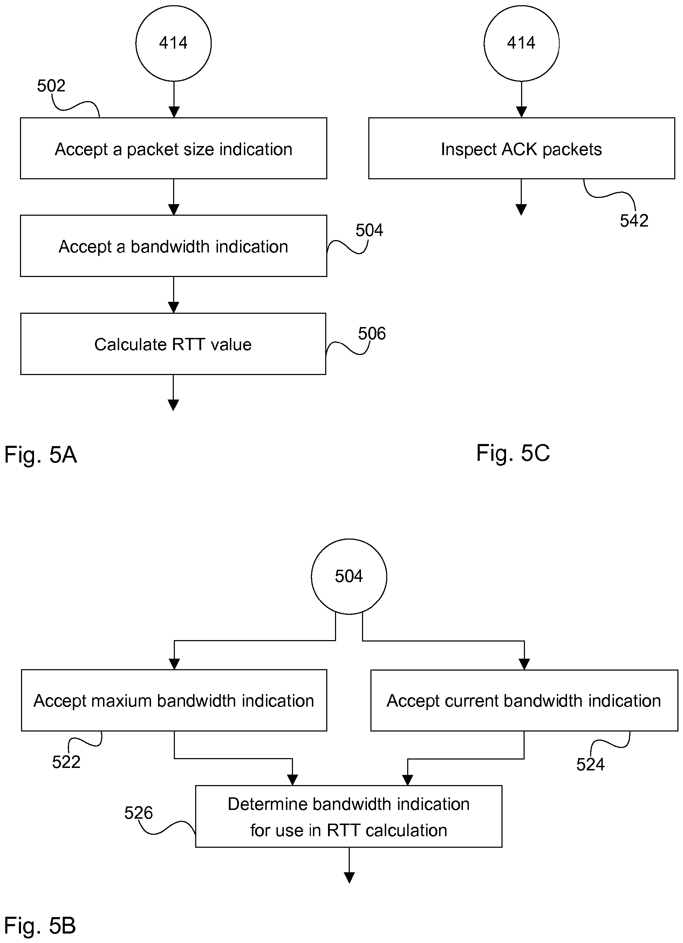

With step 414, the inspection component 302 triggers RTT estimation component 306, for example by providing a link to a corresponding record in buffer 310. The component 306 then operates to estimate a Round Trip Time (RTT) for the outgoing 314 packet. Details of said determination will be discussed below with reference to Figures 5A to 5C.

In step 416, component 306 returns control to inspection component 302. Component 306 may have stored the determined RTT in the corresponding record in buffer 310 or may provide the RTT value to component 302. Then, component 302 may operate to store sequence number, packet size, and at least a derivative of the estimated RTT in buffer 310.

For example, based on a relative framework such as a system time reference of node 106, or an absolute framework such as a network time reference, the RTT estimated as a time span may be transformed into a time point (local RTO), for example the time point when the outgoing 314 packet is predicted to reach the next node R_{DST}, the time point when the outgoing packet is predicted to arrive at the destination PC_{DST} 104, or the time point when the corresponding ACK packet arrives at the source PC_{SRC} 102.

Therefore, at the latest in step 416 a record is added to buffer 310 indicating sequence number, packet size, and an estimated time point. It is noted that it is not mandatory to store the RTT or local RTO; embodiments employing a cyclic buffer may skip that, and will be discussed below. However, many practical implementations may consider storing RTT / RTO. Use of the stored packet size will be discussed also below.

In step 418 the outgoing 314 packet may be forwarded along radio link 116. The method 400, including incoming 312 packet handling as well as outgoing 314 packet handling may be triggered by a new packet to be input to queue 106, triggering all other packets progressing forward in queue 206 towards the outgoing position 314.

It is explicitly noted for clarity reasons that the steps 402, 404, 406 and 408 of scanning and selectively dropping incoming (duplicate) packets may be performed based on those records which as may be generated and stored in steps 412 - 416.

Referring back to the handling of packets in the incoming 312 position, a step 403 may be performed prior to step 404 which includes the inspection component 302 performing a scan of queue 206 for identifying sequence numbers matching the sequence number inspected in step 402. In case of matching sequence numbers, the incoming packet can be dropped 408 from the queue, as it is clear that said packet is a superfluous retransmission: It is a duplicate of a packet in the queue 206. In case of no matching sequence numbers (405), it is branched to step 404. It is to be noted that the incoming packet would be filtered anyway in the course of the subsequent handling; however, performing the introductory check of step 403 may for example minimize processing efforts which can be worth for high efficiency implementations.

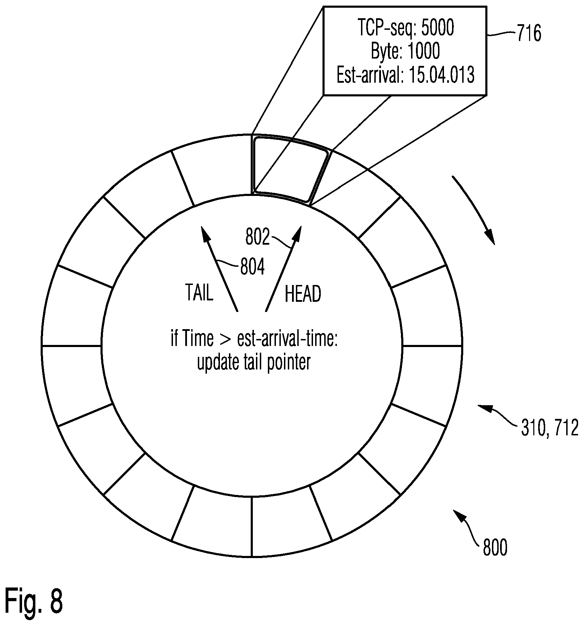

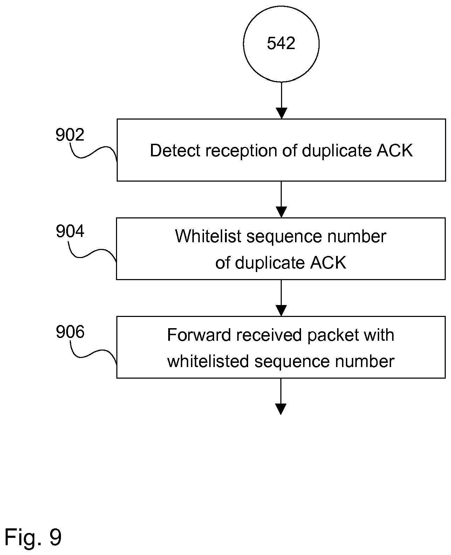

While not being included in the flow 400 for clarity reasons, the buffer manager 308 performs management handling on the metadata records in buffer 310. For example, the manager 308 may clear records in buffer 310 by scanning therethrough and removing expired records, i.e. records indicating a time point which is in the past with regard to a time reference. The manager 308 may act at any time, for example on a regular basis and/or upon arrival of a new packet at the queue entrance 312, i.e. associated with step 402. Further operation of the buffer manager will be discussed with reference to Figs. 8 and 9 below.

Fig. 5A is a flow diagram further illustrating step 414 of flow 400 in Fig. 4, i.e. an embodiment of an operation of the RTT estimator 306 in Fig. 3. The RTT estimation is triggered in step 502 by receiving the packet size of the packet in outgoing position 314 from inspection component 302 or by retrieving a size indication from a record in buffer 310. In step 504, the estimator 306 accepts a bandwidth value indicating a bandwidth of radio link 116. For example, the bandwidth value may indicate the physical layer capacity 128 as illustrated in Fig. 1. The bandwidth issue is further discussed below with reference to Fig. 5B.

In step 506, the estimator calculates an RTT value, for example calculates the result of packet size divided by bandwidth value. The resulting value is intended as a guess for a 'true' end-to-end RTT. For example, a packet size divided by a bandwidth of the physical link 116 merely indicates a time span theoretically required to transport the packet over the link 116. However, such value which may result in a too short timespan in case of, e.g. referring to a maximum bandwidth which may not in fact be available, may turn out to be a considerably better estimate than an initial RTT guessed value at the TCP sender from the SYN/ACK handshake by way of ACK packets of much smaller packet size, or a default RTO.

Additionally or alternatively to the issue of packet size, the bandwidth available over the restricted bandwidth path segment can be assumed to be of importance for one or more of the purposes discussed herein. Fig. 5B illustrates details of step 504 of Fig. 5A in this respect. According to step 522, RTT estimator 306 retrieves an indication of the available bandwidth of radio link 116 from a buffer 316, which may for example be related to radio link 116 layer operation of node 106. The bandwidth indication may indicate a maximum bandwidth, either from a physical layer capacity, or as logically available for sending packets of predefined properties (channel capacity). A permanent or constant bandwidth indication may also be provided in storage 316 by administrative input.

According to step 524, which may be performed independently of step 522, for example in parallel as illustrated in Fig. 5B or in any order, a currently available bandwidth is determined by estimator 306. As the estimator 306 is located at or near to the restricted bandwidth link 116, the node 306 is in a position generally preferred, e.g., over that of sender 102, for retrieving and employing information on the current status of link 116 and thereby achieve an appropriate basis for a guess on the current RTT.

Any information indicative of the link 116 status may be used. Generally, one or more network / protocol layers may be inspected, network management data retrieved, etc. The information may comprise for example semi-permanent channel-related information, e.g., information on network management such as traffic classes or queues. Other temporary information may relate to the number of simultaneous connections, cross traffic from other nodes, current use of non-exclusive classes or queues such as current higher priority traffic, etc. Current channel conditions may comprise information on packet delay, loss, and/or jitter. Information on transient channel conditions or channel characteristics such as fading events, channel attenuation, etc. can also be analyzed.

In step 526 the RTT estimator 306 uses one or both of the bandwidth indications of steps 522 and 524 to arrive at a final evaluation of currently available bandwidth over radio link 116. For example, in case no further information is available, a maximum bandwidth as available from a physical layer perspective and determined in step 522 may be used. In case further information on current link status is available from step 524, the bandwidth indication of step 522 may be modified or not used at all. It is noted that in case the maximum available bandwidth of step 522 is a permanent or semi-permanent indication, such value may be determined once and stored independently of any ongoing TCP connection, such that step 522 may merely comprise retrieving a stored constant.

Fig. 5C depicts another implementation of step 414 of Fig. 4 which may be performed additionally or alternatively to the processes of Figs. 5A and 5B. In step 542, inspection component 304 of Fig. 3 inspects ACK packets (ACK spoofing) in ingress queue 302 which are received incoming from radio link 122 (see Fig. 1). Radio links 116 and 122 may comprise downlink and uplink (in any order) of one and the same radio interface, air interface, etc. The ingress queue 302 of socket or stack 300 may in particular receive ACK packets sent from destination node PC_{DST} towards source node PC_{SRC} along return path 112 in Fig. 1. The inspection component 304 may scan the queue 302 on a regular basis, triggered by inspection component 302 or RTT estimator 306, upon general processing including forwarding a TCP packet from position 314 towards node 104 PC_{DST}, and/or according to still another mechanism.

The inspection component 304 may scan the queue 302 for ACK packets carrying sequence numbers matching with a sequence number as stored in buffer 310. In case of matching (exemplarily illustrated in Fig. 3 with ACK packet 318), the component 304 may provide a trigger to the RTT estimator 306. The trigger may comprise sequence number and a time stamp indicative of a reception of the ACK packet 318 in queue 302, or may provide a pointer to a correspondingly updated record in buffer 310. In case of sufficiently fine-scaled scanning operation of inspection component 304, the time stamp may simply be a value representing the time of identifying the match or operation of the component 304.

The RTT estimator 306 upon the trigger from inspection component 304 may calculate an RTT based on the time of arrival of ACK packet 318 and a time of the corresponding TCP data packet having left queue 206. A time stamp corresponding to the latter event may be written to the record by inspection component 302 (or other component) when the packet is outgoing from position 314 in step 416 or 418 in Fig. 4.

The RTT determined in this way may be used as a guess or prediction for subsequent data packets forwarded along radio link 116. If available, the guess may complement or replace other processes for determining a current RTT, as discussed above. For example, in case an RTT value as measured according to step 542 is available, its use may be preferred, while at other instances the determinations as discussed according to Figs. 5A and 5B may be used (e.g. in case an RTT determination based on ACK spoofing is outdated which would include storing the RTT value with an expiry mechanism).

According to still other embodiments, various measures for determining or estimating the current RTT as discussed above can be combined appropriately to achieve a reliable RTT prediction. For example, in case an RTT value as determined by ACK spoofing according to step 542 is above a predetermined constant threshold and/or a threshold calculated from channel conditions, the RTT value may be discarded as apparently belonging to one of the rare events of extraordinary long packet travel due to spurious effects occurring at radio link 116. The RTT value measured according to step 542 may also be stored for subsequent access (i.e. subsequent use for determining an RTT for other packets) in a storage component 320.

Some network implementations involve packet compression mechanisms which compress data packets to considerably smaller size. If such mechanism is at work, as packet size may play a role for travel time over the restricted bandwidth path segment, embodiments of RTT estimation may assume packet sizes after compression or may limit influence of packet size on RTT calculation or skip packet size in the calculations altogether, for example by measuring arrival time of ACK packets as described herein. It is generally noted that assuming a packet size which is too small may lead to too short RTT predictions which may fail to some extent to adequately filter out superfluous retransmissions, while assuming too large packet sizes may lead to RTT predictions too large and which may in some cases lead to required retransmissions being dropped.

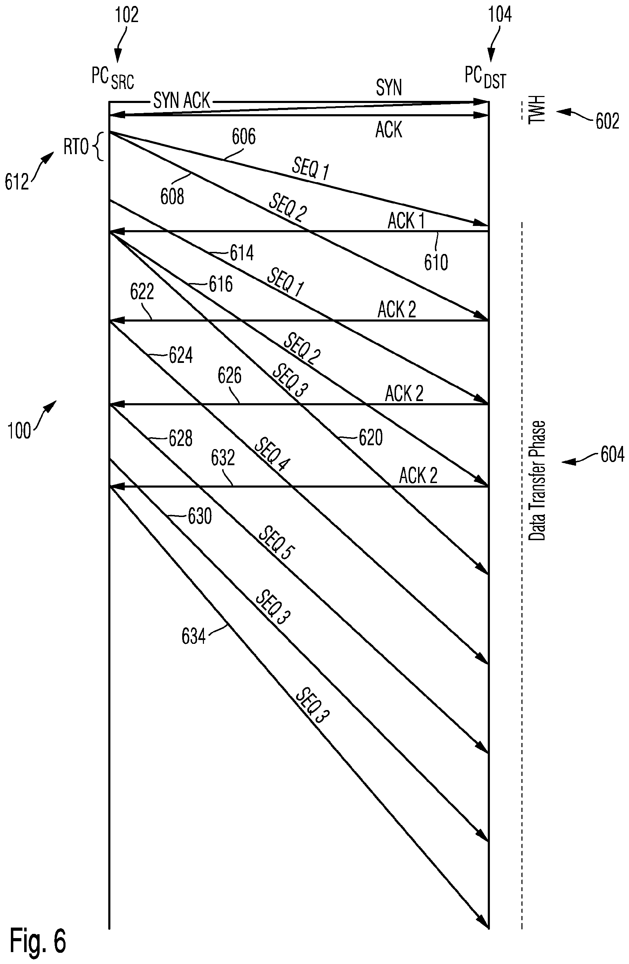

Fig. 6 is a sequence diagram illustrating a sequence of TCP packets assumed to be exchanged between PC_{SRC} 102 and PC_{DST} 104, for example within the framework of TCP connection 100 schematically illustrated in Fig. 1. Fig. 6 is intended for exemplarily illustrating effects of various embodiments of the invention. During a setup phase 602, a TCP three-way handshake (TWH) is performed which includes sending a SYN-packet from source to destination, responding by a SYN-ACK, and finally sending an ACK packet, as is well known to the skilled practitioner.

In the data transfer phase 604, TCP packets are sent from destination 102 to source 104 along forward path 110 (see Fig. 1). The data packets are indicated as arrows labeled by exemplary sequence numbers "SEQ 1", "SEQ 2", etc. in Fig. 6. Each packet successfully received by destination 104 is acknowledged by an ACK packet. These packets are indicated in Fig. 6 by arrows labeled with "ACK 1", "ACK 2", etc., wherein the sequence numbers correspond to that of the data packets on the basis of which the ACK packets are sent. It is noted that TCP implementations may operate according to a slightly different scheme of assigning sequence numbers.

The data sequence of Fig. 6 illustrates an exemplary sequence without an inventive mechanism being operable. At the beginning of the data transfer phase 604, data packets 606 SEQ 1 and 608 SEQ 2 are sent towards destination 104. Data packet 606 SEQ 1 is acknowledged with 610 ACK 1. However, it is assumed that due to restricted bandwidth path segment 116 (Fig. 1), RTT of SEQ 1 / ACK 1 is longer than RTO 612 at sender 102. Therefore, prior to 610 ACK 1 being received at sender 102, retransmission 614 of SEQ 1 is initiated although said retransmission is superfluous. Subsequently, on receipt of 610 ACK 1, superfluous retransmission 616 of SEQ 2 due to RTO, and transmission 620 of SEQ 3 is performed.

Only after retransmission 616 of SEQ 2, 622 ACK 2 is received at sender 102. Sending 624 of SEQ 4 is correspondingly initiated. Lateron, reception of retransmitted 614 SEQ 1 at source 104 triggers re-sending 626 of ACK 2 indicating (in the framework of Fig. 6) the latest received data packet. Reception of said 626 ACK 2 at sender 102 triggers sending of the next queued data packet 628 SEQ 5, as reception of a first duplicate 626 of ACK 2 (622) does not yet trigger a retransmission of SEQ 2.

Meanwhile, RTO for data packet 620 SEQ 3 has expired, which triggers superfluous retransmission 630 of SEQ 3. No retransmission would be required, as SEQ 3 is in fact not lost, but is still on the way over restricted and slow path segment 116.

Reception of superfluous retransmission 616 of SEQ 2 at receiver 104 triggers sending 632 again an ACK 2 to sender 102. Here, reception of three duplicates ACK 2 is recognized and triggers a second re-transmission 634 of SEQ 3.

The sequence in Fig. 6 illustrates superfluous retransmissions and corresponding superfluous data load due to a permanently or transiently slow path segment within the TCP connection 100. As the TCP implementation is optimized for fast end-to-end high bandwidth data transfer, a large data overhead is introduced.

According to various embodiments of the invention, the data overhead and corresponding slowdown of data transfer times (even below that of the already restricted path segment 116) can be minimized. For example, retransmission 614 of SEQ 1 can be absorbed in forwarding node 106 (not illustrated in Fig. 6 for clarity) prior to the restricted bandwidth path segment 116. The retransmitted packet 614 may be dropped in node 106 due to said packet 614 arriving prior to expiry of a predicted RTT of packet 606, wherein the predicted RTT may for example be determined according to one or more of the above-discussed approaches. In case superfluous packet 614 is captured and dropped prior to it being forwarding over the restricted bandwidth path, the major effect of said retransmission 614 on the slowdown of data transmission rate and time can be eliminated.

Similarly, effects of superfluous retransmission 616 can be eliminated. The retransmitted 616 packet SEQ 2 can be captured and dropped in forwarding node 106 based on an appropriate estimation of RTT for packet 608, which may for example take into account one or more of restricted bandwidth of path segment 116, packet size of packet 608, etc. as discussed above. When concluding upon reception of duplicate packet 616 at forwarding node 106 that packet 608 may still be on the way, packet 616 can be dropped without any complex mechanisms being required such as signaling of channel conditions of segment 116 towards sender 102, signaling of packet drop, etc.

Various embodiments of the invention can further eliminate deterioration of TCP connection 100 due to retransmission 630. The duplicate SEQ 3 may be discarded on reception in forwarding node 106 in case of a predicted RTT for packet 620 indicating that packet 620 (or a corresponding ACK) may still be on the way given the low data rate of path segment 116, such that packet 630 may preferably be filtered before narrow path segment 116.

Similarly, also the retransmission 632 of SEQ 3 may be filtered out by forwarding node 106, which may lead to the restricted bandwidth path segment 116 being less polluted by retransmissions including those retransmissions initiated by conventional TCP mechanisms during initial phases of connection setup and/or data transmission rate adjustment, and/or spurious and superfluous retransmissions caused by spurious effects occurring over, e.g., radio links and erroneously interpreted by conventional TCP mechanisms as congested network conditions, data loss, etc.

In the example sequence of Fig. 6, assuming exemplarily a constant data packet size of 1500 bytes, the data transfer comprises 13500 bytes, from which 6000 bytes are superfluous retransmissions. Embodiments of the invention enable filtering some or all of the superfluous retransmissions prior to them markedly decreasing an effective data rate and transmission time due to polluting restricted bandwidth path segment 116 in Fig. 1.

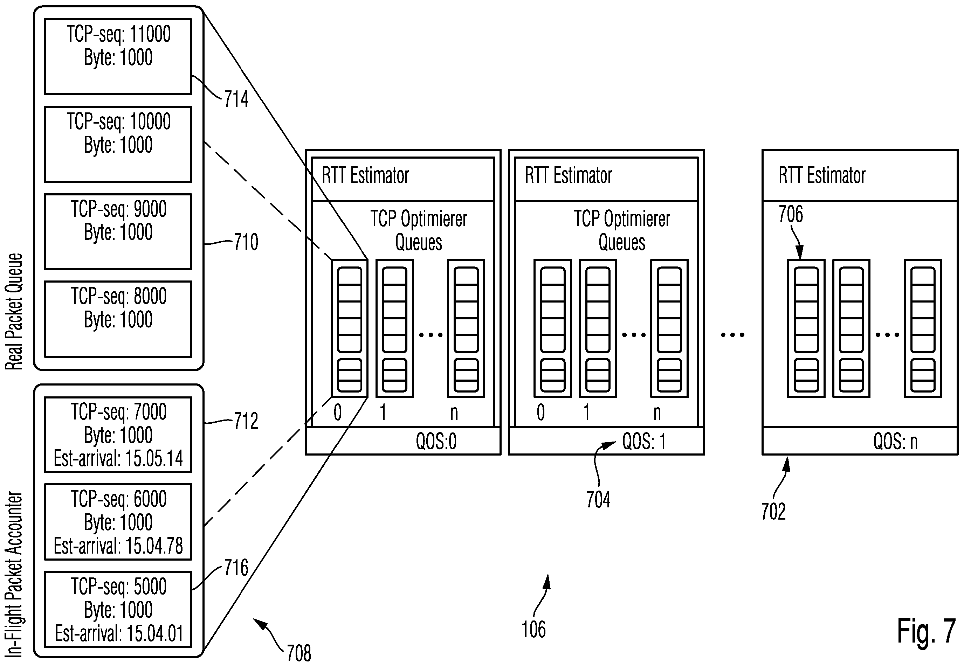

Fig. 7 illustrates a further view from a functional perspective on forwarding node 106 introduced in the previous figures. According to the embodiment of Fig. 7, node 106 comprises multiple instances of RTT estimators 702. In the illustrated example, each of a plurality of different traffic (QoS) classes 704 is assigned a particular instance of RTT estimator 702. Each QoS class 704 may further implement multiple queues 706. It is noted that the various instances of RTT estimators 702 per traffic class 704, the QoS classes 704, and/or one or more of the queues 706 per class 704 / estimator 702 may be permanently implemented or may be instantiated as needed. For example, there may be one queue 706 instantiated per TCP connection, or per sending node, per network interface, etc. QoS classes 704 and/or estimators 702 may be instantiated if a specific class is requested per packet header, on connection setup, by administrative action, etc.

Generally, associating an RTT estimator to traffic class can be advantageous as reliable RTT predictions may take account of the specific, different forwarding mechanisms of different QoS classes. Nevertheless, functional associations different from that illustrated in Fig. 7 can be contemplated. As an example, instead of an RTT estimator 702 invoking one or more queues, according to another embodiment a forwarding queue may invoke one or more RTT estimators.

Queue 708 is by inset exemplarily illustrated in more detail, wherein the following discussion may similarly apply to any one or more of the other queues 706. Queue 708 comprises a packet forwarding queue 710 and a virtual packet queue 712. In packet forwarding queue 710, packets may be enqueued for forwarding similar to what has been described with regard to egress queue 206 in Fig. 2. However, it is recalled that according to other embodiments, additionally or alternatively also ingress queues may be adapted for performing one or more of the approaches described herein. From the header information of enqueued packets 714, only TCP sequence numbers and packet sizes in bytes are highlighted in Fig. 7 for comparison with the information held in virtual queue 712.

The virtual packet queue 712, which may for example be associated in a one-to-one relation to the packet forwarding queue 710, may be an implementation of the buffer 310 of Fig. 3 and is designated "In-Flight Packet Accounter", as it accounts for packets which have already left queue 710 for being forwarded but which may be on the way or "in-flight" towards the desired destination. The information per virtual packet or record 716 is illustrated in Fig. 7 as comprising the TCP sequence number, the packet size, and an estimated arrival time. The packet size may have been used for calculating the estimated RTT, wherein the RTT may have been converted in the predicted estimated arrival time or local effective RTO as shown. According to other embodiments, more or less information may be included per record 716. For example, it has been described above that in case of ACK spoofing a time of reception of the corresponding ACK packet may be added to the record for use in the RTT / RTO calculations. The packet size may no longer be required after RTT calculation and may therefore be removed from the record. Other embodiments may store more data such as taken, for example, from the headers of the corresponding packets, may keep the RTT even after transformation into an RTO for use for other packets, etc.

According to various embodiments, the Packet Accounter 712 may be scanned for identifying and subsequently dropping packets enqueued in queue 710 having a sequence number matching with one of the numbers in the virtual In-Flight packet queue 712.

The buffer manager 308 introduced in Fig. 3 may act to clean the virtual queue 712 by removing records 716 after the estimated arrival time has passed by. The buffer manager 308 may act as a garbage collector actively removing entries. Another operation will be discussed with reference to the specific embodiment of Fig. 8 discussed next.

Fig. 8 illustrates a buffer embodiment 800 which may be an implementation of the buffer 310 of Fig. 3 and/or the In-Flight Packet Accounter 712 of Fig. 7.

The buffer 800 is implemented as a cyclic or ring buffer. Each in-flight packet is represented by a record wherein the records are illustrated as implementations of the records 716 discussed with reference to Fig. 7. Each outgoing packet, upon leaving the queue 710 in Fig. 7 and/or 206 in Figs. 2, 3, adds a new entry 716 in the metadata buffer 800. A head pointer 802 is positioned accordingly to account for a new record 716.

An operation is described for handling outdated entries or records 716. Specifically, the buffer manager 308 introduced in Fig. 3 (or any other control instance) may operate to update a tail or end pointer 804 of cyclic buffer 800 to ignore outdated packet records. Records can be treated as outdated if their associated estimated arrival time has been passed by, i.e. it is assumed that these packets have reached their destination meanwhile or that the corresponding ACK has been reached at the source such that a retransmission arriving after estimated arrival time in queue 710 / 206 should be treated as legitimate retransmission. For example, the buffer manager 308 may act to update the tail pointer 804 any time a new packet enters queue 710 / 206 such that after update a scan for duplicate packets can be performed on entries in buffer 800.

The cyclic buffer 800 is an example of an efficient (fast) implementation of the in-flight virtual packet queue 712 / 310, as it is able to process many packets with high efficiency, e.g. minimum overhead. For example, only the two pointers 802 and 804 have to be managed for an arbitrary number of records 716.

Fig. 9 is a flow diagram illustrating an additional or alternative exemplary operation 900 of the functional components of Fig. 3. According to some embodiments, operation 900 may add to step 542 as depicted in Fig. 5B.

According to step 902, a reception of a duplicate ACK packet is detected. A specific embodiment of this step has been discussed above for step 542, according to which inspection component 304 of Fig. 3 may detect ACK packets in ingress queue 302. For implementing the enhanced functionality of detecting duplicate ACK packets, the inspection component 304 may operate to provide a specific indication of one or more ACK packets being received in the record of the corresponding sequence number in virtual in-flight buffer queue 310.

As a specific implementation example, the inspection component 304 may operate to record in buffer 310 the number of ACK packets received per sequence number entry. A two bit field would suffice to indicate the reception of 0, 1, 2, or 3 packets, which would for example allow the handling discussed in the following to be triggered only after reception of the third duplicate ACK.

According to step 904, a sequence number as indicated in the duplicate ACK packet is whitelisted, i.e. it is indicated that a packet with said sequence number should be forwarded instead of, e.g., being dropped. In the specific example discussed here, step 904 can be implemented by, e.g., setting both bits of the above-discussed two-bit flag as an indication for unconditional forwarding. Accordingly, in step 906, in case a data packet is in fact received with said whitelisted sequence number, it is unconditionally forwarded, irrespective of whether or not estimated arrival time or predicted RTT has passed by.

As a specific example implementation of step 906, the records in the virtual in-flight buffer 310 / 712 / 800 may be scanned in step 412 as discussed with reference to Fig. 4 for matching sequence number and in addition for determining whether a flag such as the above-discussed two-bit flag is set. If the flag is set as an indication that, e.g., three duplicate ACKs have been received for that sequence number, unconditional forwarding of said packet is initiated.

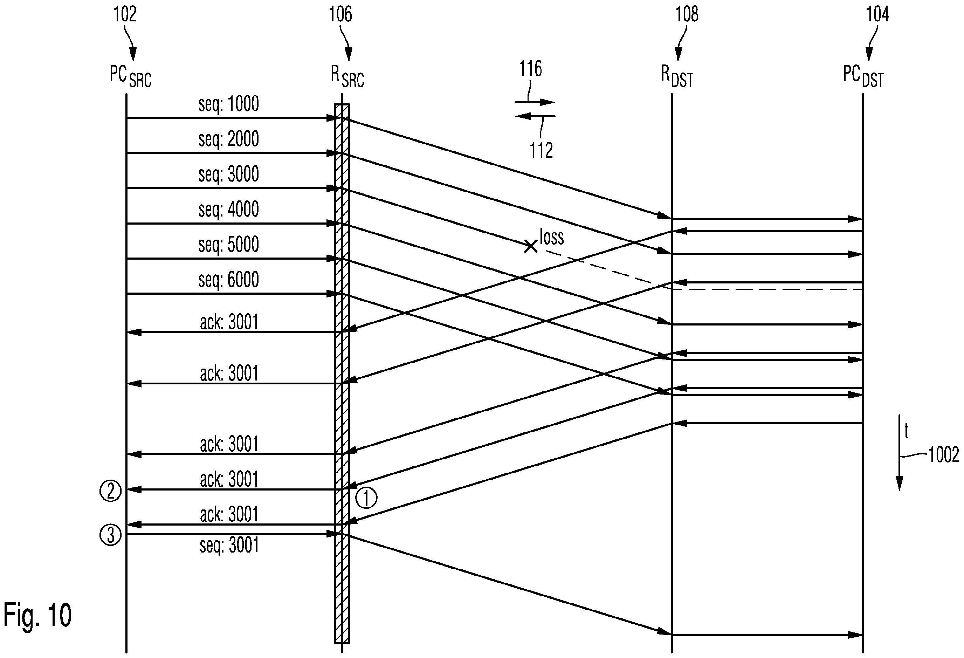

Fig. 10 is a sequence diagram illustrating effects of the embodiment discussed with reference to Fig. 9. As an exemplary framework, it is referred to the TCP connection 100 with sender 102, destination 104, and intermediate forwarding nodes 106 and 108 over restricted bandwidth path segments 116, 122 as introduced with Figs. 1 and 2. Packets are referred to with a similar notation as has been introduced with Fig. 6. Time t progresses as indicated by arrow 1002.

The return path 112 (Fig. 1) for ACK packets is inspected for missing ACKs, e.g., ingress queue 301 in Fig. 3. If TCP packets are identified which are missing, i.e. which have not been ACKed, a retransmission of the corresponding packet is required. Accordingly, the packet has to be whitelisted in forwarding node 106 to ensure its successful transmission towards the destination.

In the example sequence of Fig. 10, packets with sequence numbers 1000 and 2001 are received and ACKed. It is noted that in Fig. 10 the usual TCP convention is followed, according to which the ACKs indicate the sequence number of the next segment expected to arrive at the destination.

The data packet with sequence number 3001 is assumed to be in fact lost over radio link 116. In response to receiving each of the data packets with sequence numbers 4001, 5001, and 6001, the destination sends an ACK packet with sequence number 3001. The forwarding node 106 monitors ingress queue of radio link 122. Reception of the third duplicate ACK at the point numbered (1) in Fig. 10 triggers that R_{src} accounts data packet with sequence number 3001 as lost. With reference to the above-discussed exemplary implementation, the record representing sequence number 3001 has a flag set which indicates unconditional forwarding of an incoming packet with that sequence number along forward path 116.

At point (2) in Fig. 10 the sender PC_{src} treats the duplicate ACK as an indicator of a lost packet and retransmits the packet with sequence number 3001 at point (3). According to the whitelist indication set in the record with sequence number 3001 in buffer 310 of R_{SRC}, no matter what the original estimated arrival time was, R_{src} knows that the packet is required and does not drop the packet.

In case a data packet would be lost on the forward path before reaching R_{src}, no record would be available for the sequence number in the in-flight packet buffer. However, according to some embodiments the inspection of ACK packets of the return path can be adapted to create a record with a missing sequence number to cover that case. Alternatively, it may be assumed that packet loss is insignificant along said path segment.

It is to be noted that in many cases a required or legitimate retransmission (in contrast to a superfluous retransmission) will be initiated after the record in the in-flight packet accounter has been removed due to expired RTT / RTO in the forwarding node. In that case a retransmitted packet will not be identified as a retransmission in the forwarding node and will be forwarded according to normal handling.

The scheme discussed with reference to Figs. 9 and 10 handles the case that a retransmission is required and that the estimated arrival time is in the future, which could lead to a legitimate retransmission being dropped. The scheme therefore implements a check to avoid such unwanted droppings.

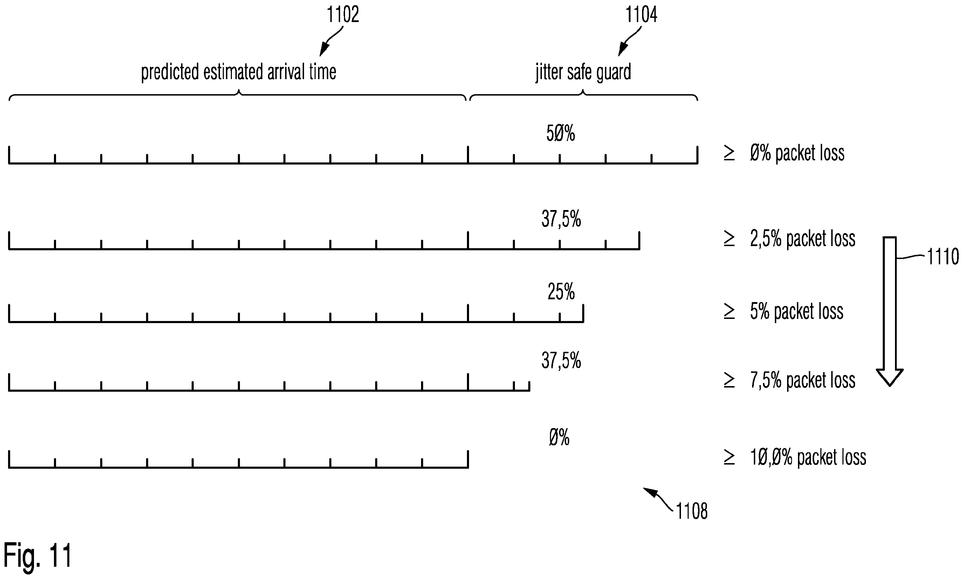

Fig. 11 illustrates an embodiment wherein a predicted estimated arrival time 1102 is added with a safety margin or safety guard 1104 to take account of jitter. The arrival time 1102 may be determined according to one or more of the approaches discussed above, for example based on a measured and/or calculated RTT. In case channel quality information is available, for example lower link layer information, the estimated arrival time can be modified and corresponding filtering operation in a forwarding node can be optimized as exemplarily discussed in the following.

It is specifically assumed that information regarding packet loss is available, for example an indication of packet loss rate in percent over a restricted bandwidth path segment such as radio link 116 in the preceding figures. Other embodiments may rely on additional or other information. Line 1106 in Fig. 11 illustrates a modification of the predicted estimated arrival time 1102 in case of optimum channel conditions, i.e. vanishing packet loss. In other words, retransmissions due to packet loss, which should be allowed to pass by the forwarding node implementing the embodiment, do not occur. Retransmissions can then only be triggered by sender RTO or duplicate ACKs, i.e. only superfluous retransmissions occur which are to be filtered prior to the duplicate packets entering the restricted path segment. The corresponding predicted estimated arrival time 1102 indicates the time span within which duplicate packets are filtered in the forwarding node.

Even in case of optimum network conditions as indicated by vanishing packet loss in line 1106, a significant jitter will generally be present. Variations in packet RTT may result from a plurality of factors such as cross traffic, channel characteristics, higher priority traffic, etc. It is not in generally feasible to consider the effects of these influences in detail in the predicted estimated arrival time, i.e. the specific effects of these factors at any particular time are unpredictable. However, it is proposed to add an overall jitter safeguard 1104 to the predicted estimated arrival time 1102. In line 1106, the jitter safeguard 1104 has been exemplarily chosen to extend the calculated predicted estimated arrival time 1102 by 50%.

The case of channel information indicating large packet loss rates of 10 % or more is exemplarily indicated in line 1108. As packet loss occurs, occurrence of legitimate retransmissions in the forwarding node cannot be excluded. Therefore, the filtering function in the node is controlled by the predicted RTT or corresponding estimated arrival time without additional safety margin. In other words, retransmissions arriving after the estimated arrival time at the forwarding node are not filtered because it cannot be discriminated reliably between legitimate retransmissions and superfluous retransmissions.

The jitter safeguard 1104 can be made dependent on channel characteristics, e.g. packet loss rate, as illustrated by arrow 1110 and the lines intermediate to lines 1106 and 1108 for intermediate packet loss rates in Fig. 11. The specific numerical safeguard values as well as the dependency thereof on channel conditions, if any, have to be selected according to the circumstances of any specific application case.

In network environments such as comprising a low bandwidth path segment, useless transmissions can have a significant impact on the effective transmission rates and times. According to various embodiments discussed herein, TCP data transfer can be optimized by remediating spurious retransmissions. As less superfluous duplicate data packets are transmitted via, for example, a restricted bandwidth path segment, an effective data rate can be increased and/or effective transmission time can be decreased. Duplicate packets are identified in a node preferably located upstream a restricted bandwidth path segment. Duplicate packets can be identified even for packets having already left the node, i.e. "in flight". An RTT is predicted for the packet in flight. On the basis of the predicted RTT, drop of duplicate packets can be performed and adverse effects of spurious retransmissions over the restricted path segment can be minimized. In this way an inaccurate TCP retransmission timer, e.g. at sender side, can be remediated.

## Claims

1. A method of forwarding data packets along a TCP connection (100) in a forwarding node (106) of a communication network, comprising:
receiving (402) a data packet including a TCP sequence number from an external upstream TCP source (102);
storing (416) the sequence number and estimating (414) an RTT value indicative of a Round Trip Time for the received data packet, wherein the RTT value is estimated (502, 506) based on a packet size of the received data packet, and wherein the RTT value is estimated (504, 506) based on a bandwidth indication indicative of a bandwidth of a downlink path segment (116) along which to forward the packet by inspecting one or more network or protocol layers for channel related information, wherein a safeguard value (1104) is added to the estimated RTT value, and wherein the safeguard value is determined based on current conditions over a downstream path segment such as an indication of packet loss rate in percent over a restricted bandwidth path segment, wherein the safeguard value is vanishing in case of a high packet loss rate;
comparing (404), in case a further packet is received within the Round Trip Time indicated by the RTT value, a sequence number of the further packet with the stored sequence number, and
selectively dropping (406, 408) the further packet in case the compared sequence numbers are matching, otherwise forwarding the further packet towards an external downstream TCP destination (104).

2. The method according to claim 1,
wherein the bandwidth indication represents a maximum bandwidth (128, 522) available over the path segment.

3. The method according to claim 1,
wherein the bandwidth indication represents a bandwidth (524) as currently available over the path segment.

4. The method according to claim 3,
wherein the current bandwidth is determined based on at least one of the following conditions over the path segment: packet delay, loss, jitter, number of simultaneous connections, cross traffic from other nodes, higher priority traffic, channel attenuation.

5. The method according to any one of the preceding claims, wherein the RTT value is estimated based on ACK packets (542), which represent acknowledged packets received by the forwarding node along the return path of the TCP connection.

6. The method according to any one of the preceding claims, comprising the further steps of
detecting (902) a reception of a duplicate ACK packet;
whitelisting (904) a sequence number as indicated in the duplicate ACK packet; and
in case a data packet is received having the whitelisted sequence number, unconditionally forwarding (906) said data packet.

7. The method according to any one of the preceding claims, wherein the data packets are received in an egress queue (206) of the forwarding node (106).

8. The method according to any one of the preceding claims, wherein the forwarding node further operates to compare (403), by sequence number, a data packet to be forwarded with one or more further packets enqueued in the egress queue and drop (408) an enqueued packet in case of (405) matching sequence numbers.

9. The method according to any one of the preceding claims, wherein the forwarding node (106) operates to store sequence numbers in a cyclic buffer (800).

10. A computer program comprising program code portions for performing the steps of any one of the preceding claims when the computer program is executed on one or more computing devices (106, 300) and/or signal processors.

11. A forwarding node (106) for forwarding data packets along a TCP connection, comprising:
a component (206) adapted to receive a data packet including a TCP sequence number from an external upstream TCP source (102);
a component (302, 306) adapted to store the sequence number and estimate an RTT value representing a Round Trip Time for the received data packet, wherein the RTT value is estimated (502, 506) based on a packet size of the received data packet, and wherein the RTT value is estimated (504, 506) based on a bandwidth indication indicative of a bandwidth of a downlink path segment (116) along which to forward the packet by inspecting one or more network or protocol layers for channel related information, wherein a safeguard value (1104) is added to the estimated RTT value, and wherein the safeguard value is determined based on current conditions over a downstream path segment such as an indication of packet loss rate in percent over a restricted bandwidth path segment, wherein the safeguard value is vanishing in case of a high packet loss rate;
a component (302) adapted to compare, in case a further packet is received within the Round Trip Time indicated by the RTT value, a sequence number of the further packet with the stored sequence number, and to selectively drop the further packet in case the compared sequence numbers are matching, otherwise to forward the further packet towards an external downstream TCP destination (104).

## Patentansprüche

1. Ein Verfahren zum Weiterleiten von Datenpaketen entlang einer TCP-Verbindung (100) in einem Weiterleitungsknoten (106) eines Kommunikationsnetzwerks, mit den Schritten:
Empfangen (402) eines Datenpakets mit einer TCP-Folgenummer von einer externen vorgeschalteten TCP-Quelle (102);
Speichern (416) der Folgenummer und Schätzen (414) eines RTT-Werts, der eine Umlaufzeit (Round Trip Time) für das empfangene Datenpaket anzeigt, wobei der RTT-Wert auf der Grundlage einer Paketgröße des empfangenen Datenpakets geschätzt wird (502, 506), und wobei der RTT-Wert auf der Grundlage einer Bandbreitenangabe geschätzt wird (504, 506), die eine Bandbreite eines Downlink-Pfadsegmentes (116) anzeigt, entlang welchem das Paket weiterzuleiten ist, indem eine oder mehr Netzwerk- oder Protokollschichten für kanalbezogene Informationen überprüft werden, wobei ein Sicherungswert (1104) zu dem geschätzten RTT-Wert addiert wird, und wobei der Sicherungswert auf der Grundlage aktueller Bedingungen über ein nachgeschaltetes Pfadsegment wie z.B. eine Angabe einer Paketverlustrate in Prozent über ein eingeschränktes Bandbreitenpfadsegment bestimmt wird, wobei der Sicherungswert im Falle einer hohen Paketverlustrate verschwindend ist;
Vergleichen (404), wenn innerhalb der durch den RTT-Wert angegebenen Round Trip Time ein weiteres Paket empfangen wird, einer Folgenummer des weiteren Pakets mit der gespeicherten Folgenummer, und
wahlweise Verwerfen (406, 408) des weiteren Pakets, wenn die verglichenen Folgenummern übereinstimmen, andernfalls Weiterleiten des weiteren Pakets zu einem externen nachgeschalteten TCP-Zielort (104).

2. Das Verfahren nach Anspruch 1,
wobei die Bandbreitenanzeige eine maximale Bandbreite (128, 522) darstellt, die über das Pfadsegment verfügbar ist.

3. Das Verfahren nach Anspruch 1,
wobei die Bandbreitenanzeige eine Bandbreite (524) anzeigt, wie sie aktuell über das Pfadsegment verfügbar ist.

4. Das Verfahren nach Anspruch 3,
wobei die aktuelle Bandbreite auf der Grundlage mindestens einer der folgenden Bedingungen über das Pfadsegment bestimmt wird: Paketverzögerung, Verlust, Schwankung, Anzahl gleichzeitiger Verbindungen, Kreuzverkehr von anderen Knoten, Verkehr mit höherer Priorität, Kanalabschwächung.

5. Das Verfahren nach einem der vorhergehenden Ansprüche,
wobei der RTT-Wert auf der Basis von ACK-Paketen (542) geschätzt wird, welche bestätigte Pakete darstellen, die durch den Weiterleitungsknoten entlang des Rückleitungspfades der TCP-Verbindung empfangen werden.

6. Das Verfahren nach einem der vorhergehenden Ansprüche,
mit den weiteren Schritten:
Erfassen (902) eines Empfangs eines doppelten ACK-Pakets;
Akzeptieren (904) einer Folgenummer wie in dem doppelten ACK-Paket angegeben; und
wenn ein Datenpaket empfangen wird, das die akzeptierte Folgenummer aufweist, bedingungsloses Weiterleiten (906) des besagten Pakets.

7. Das Verfahren nach einem der vorhergehenden Ansprüche,
wobei die Datenpakete in einer Ausgangswarteschlange (206) des Weiterleitungsknotens (106) empfangen werden.

8. Das Verfahren nach einem der vorhergehenden Ansprüche,
wobei der Weiterleitungsknoten ferner so funktioniert, dass er mittels Folgenummer ein weiterzuleitendes Datenpaket mit einem oder mehreren Paketen vergleicht, die in die Ausgangswarteschlange eingereiht sind, und im Falle von (405) übereinstimmenden Folgenummern ein eingereihtes Paket verwirft (408).

9. Das Verfahren nach einem der vorhergehenden Ansprüche,
wobei der Weiterleitungsknoten (106) so funktioniert, dass er Folgenummern in einem periodischen Puffer (800) speichert.

10. Ein Computerprogramm mit Programmcodebereichen zur Durchführung der Schritte nach einem der vorhergehenden Ansprüche, wenn das Computerprogramm auf einer oder mehreren Recheneinrichtungen (106, 300) und/oder einem oder mehreren Signalprozessoren ausgeführt wird.

11. Ein Weiterleitungsknoten (106) zum Weiterleiten von Datenpaketen entlang einer TCP-Verbindung, mit:
einem Bauteil (206), das zum Empfangen eines eine TCP-Folgenummer enthaltenden Datenpakets von einer externen vorgeschalteten TCP-Quelle (102) geeignet ist;
einem Bauteil (302, 306), das zum Speichern der Folgenummer und Schätzen eines RTT-Wertes geeignet ist, der eine Round Trip Time für das empfangene Datenpaket darstellt, wobei der RTT-Wert auf der Grundlage einer Paketgröße des empfangenen Datenpakets geschätzt wird (502, 506), und wobei der RTT-Wert auf der Grundlage einer Bandbreitenanzeige geschätzt wird (504, 506), die eine Bandbreite eines Downlink-Pfadsegments (116) anzeigt, entlang welchem das Paket weiterzuleiten ist, indem eine oder mehrere Netzwerk- oder Protokollschichten für kanalbezogene Informationen überprüft werden, wobei ein Sicherungswert (1104) zu dem geschätzten RTT-Wert addiert wird, und wobei der Sicherungswert auf der Grundlage aktueller Bedingungen über ein nachgeschaltetes Pfadsegment, wie zum Beispiel eine Angabe einer Paketverlustrate in Prozent über ein eingeschränktes Bandbreitenpfadsegment, bestimmt wird, wobei der Sicherungswert im Falle einer hohen Paketverlustrate verschwindend ist;
einem Bauteil (302), das, falls innerhalb der durch den RTT-Wert angegebenen Round Trip Time ein weiteres Paket empfangen wird, zum Vergleichen einer Folgenummer des weiteren Pakets mit der gespeicherten Folgenummer und zum wahlweisen Verwerfen des weiteren Pakets im Falle einer Übereinstimmung der verglichenen Folgenummern, andernfalls zum Weiterleiten des weiteren Pakets zu einem externen nachgeschalteten TCP-Zielort (104) geeignet ist.

## Revendications

1. Procédé de transfert de paquets de données le long d'une connexion TCP (100) dans un noeud de transfert (106) d'un réseau de communication, comprenant :
la réception (402) d'un paquet de données incluant un numéro de séquence TCP en provenance d'une source TCP en amont externe (102) ;
le stockage (416) du numéro de séquence et l'estimation (414) d'une valeur RTT indicative d'un Temps Aller-Retour pour le paquet de données reçu, où la valeur RTT est estimée (502, 506) sur la base d'une taille de paquet du paquet de données reçu, et où la valeur RTT est estimée (504, 506) sur la base d'une indication de largeur de bande indicative d'une largeur de bande d'un segment de trajet de liaison descendante (116) le long duquel transférer le paquet en inspectant une ou plusieurs couches de réseau ou de protocole pour des informations liées à un canal, où une valeur de sauvegarde (1104) est ajoutée à la valeur RTT estimée, et où la valeur de sauvegarde est déterminée sur la base de conditions actuelles sur un segment de trajet en aval comme une indication de taux de perte de paquet en pour cent sur un segment de trajet de largeur de bande restreinte, où la valeur de sauvegarde tend vers zéro en cas de taux de perte de paquet élevé ;
la comparaison (404), dans le cas où un paquet supplémentaire est reçu dans le Temps Aller-Retour indiqué par la valeur RTT, d'un numéro de séquence du paquet supplémentaire avec le numéro de séquence stocké, et
l'abandon sélectif (406, 408) du paquet supplémentaire dans le cas où les numéros de séquence comparés sont concordants, sinon le transfert du paquet supplémentaire vers une destination TCP en aval externe (104).

2. Procédé selon la revendication 1,
dans lequel l'indication de largeur de bande représente une largeur de bande maximale (128, 522) disponible sur le segment de trajet.

3. Procédé selon la revendication 1,
dans lequel l'indication de largeur de bande représente une largeur de bande (524) telle que disponible actuellement sur le segment de trajet.

4. Procédé selon la revendication 3,
dans lequel la largeur de bande actuelle est déterminée sur la base d'au moins l'une des conditions suivantes sur le segment de trajet : retard de paquet, perte, gigue, nombre de connexions simultanées, trafic croisé d'autres noeuds, trafic de priorité supérieure, atténuation de canal.

5. Procédé selon l'une quelconque des revendications précédentes, dans lequel la valeur RTT est estimée sur la base de paquets ACK (542), qui représentent des paquets acquittés reçus par le noeud de transfert le long du trajet de retour de la connexion TCP.

6. Procédé selon l'une quelconque des revendications précédentes, comprenant les étapes supplémentaires consistant à
détecter (902) une réception d'un paquet ACK en double ;
mettre sur liste blanche (904) un numéro de séquence comme indiqué dans le paquet ACK en double ; et
dans le cas où un paquet de données est reçu ayant le numéro de séquence sur liste blanche, transférer sans condition (906) ledit paquet de données.

7. Procédé selon l'une quelconque des revendications précédentes, dans lequel les paquets de données sont reçus dans une file d'attente de sortie (206) du noeud de transfert (106).

8. Procédé selon l'une quelconque des revendications précédentes, dans lequel le noeud de transfert fonctionne en outre pour comparer (403), par numéro de séquence, un paquet de données à transférer avec un ou plusieurs paquets supplémentaires mis en file d'attente dans la file d'attente de sortie et abandonner (408) un paquet mis en file d'attente en cas de (405) numéros de séquence concordants.

9. Procédé selon l'une quelconque des revendications précédentes, dans lequel le noeud de transfert (106) fonctionne pour stocker des numéros de séquence dans un tampon cyclique (800).

10. Programme informatique comprenant des parties de code de programme pour effectuer les étapes de l'une quelconque des revendications précédentes lorsque le programme informatique est exécuté sur un ou plusieurs dispositifs informatiques (106, 300) et/ou processeurs de signaux.

11. Noeud de transfert (106) pour transférer des paquets de données le long d'une connexion TCP, comprenant :
un composant (206) adapté pour recevoir un paquet de données incluant un numéro de séquence TCP en provenance d'une source TCP en amont externe (102) ;
un composant (302, 306) adapté pour stocker le numéro de séquence et estimer une valeur RTT représentant un Temps Aller-Retour pour le paquet de données reçu, où la valeur RTT est estimée (502, 506) sur la base d'une taille de paquet du paquet de données reçu, et où la valeur RTT est estimée (504, 506) sur la base d'une indication de largeur de bande indicative d'une largeur de bande d'un segment de trajet de liaison descendante (116) le long duquel transférer le paquet en inspectant une ou plusieurs couches de réseau ou de protocole pour des informations liées à un canal, où une valeur de sauvegarde (1104) est ajoutée à la valeur RTT estimée, et où la valeur de sauvegarde est déterminée sur la base de conditions actuelles sur un segment de trajet en aval comme une indication de taux de perte de paquet en pour cent sur un segment de trajet de largeur de bande restreinte, où la valeur de sauvegarde tend vers zéro en cas de taux de perte de paquet élevé ;
un composant (302) adapté pour comparer, dans le cas où un paquet supplémentaire est reçu dans le Temps Aller-Retour indiqué par la valeur RTT, un numéro de séquence du paquet supplémentaire avec le numéro de séquence stocké, et pour abandonner sélectivement le paquet supplémentaire dans le cas où les numéros de séquence comparés sont concordants, sinon transférer le paquet supplémentaire vers une destination TCP en aval externe (104).
